# EUROPÄISCHE PATENTSCHRIFT

(11) **EP 0 956 524 B1**
(45) Veröffentlichungstag und Bekanntmachung des Hinweises auf die Patenterteilung: **21.03.2001**
(21) Anmeldenummer: 98922761.6
(22) Anmeldetag: 22.04.1998
(51) Int. Cl.: G05D 7/00, G05D 16/16, G05D 11/035, G05D 11/13, G01F 1/74, G01F 11/06, F16K 31/365

(54) **DOSIERVORRICHTUNG**
PROPORTIONER
DISPOSITIF DE DOSAGE

(30) Priorität: 22.04.1997 DE 19716897
(43) Veröffentlichungstag der Anmeldung: 17.11.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: RICHTER, Martin, D-81677 München (DE)
(74) Vertreter: Schoppe, Fritz, Dipl.-Ing.
(86) Internationale Anmeldenummer: EP9802373
(87) Internationale Veröffentlichungsnummer: WO9848328

(56) Entgegenhaltungen:
- EP-A- 0 239 331
- GB-A- 2 064 826
- US-A- 4 330 003

## Beschreibung

Die vorliegende Erfindung bezieht sich auf eine Dosiervorrichtung zum Dosieren eines Fluidflusses von einer Eingangsseite zu einer Ausgangsseite eines Dosiervorrichtungselements, die beispielsweise als Dosiervorrichtung bei der Medikamentendosierung auf dem Gebiet der Medizintechnik geeignet ist.

Auf dem Gebiet der Medizintechnik sind Dosiervorrichtungen bekannt, die Flußwiderstände umfassen, deren Durchfluß von dem Druck abhängt, mit dem das zu dosierende Medium strömungsmäßig vor dem Flußwiderstand beaufschlagt ist. Zur Erfassung der Druckdifferenz werden üblicherweise zwei unterschiedliche Drucksensoren verwendet, die strömungsmäßig vor und strömungsmäßig hinter dem Flußwiderstand angeordnet sind.

Bekannte Flußwiderstände sind beispielsweise durch Glaskapillare oder Mikrokanäle in kapillarer Form gebildet. Nachteilig an derartigen bekannten Dosiervorrichtungen ist der aufwendige Aufbau derselben, der dadurch bedingt ist, daß ein Flußwiderstand und zwei unterschiedliche Drucksensoren, die strömungsmäßig vor und hinter dem Flußwiderstand angeordnet sind, benötigt werden.

In den Patent Abstracts of Japan, P 1828, November 18, 1994, Vol. 18, No. 609 ist eine Einrichtung zum Messen einer Durchflußmenge beschrieben, bei der in einem durchströmten Kanal bzw. einem durchströmten Rohr eine elastische Platte mit einer Öffnung angeordnet ist. Ferner sind in der elastischen Platte Einrichtungen zum Erfassen der Auslenkung der elastischen Platte vorgesehen.

Aus der DE 195 29 396 A1 ist eine Meßvorrichtung zur Messung der Durchflußmenge eines in einem Strömungsquerschnitt strömenden Mediums bekannt, bei der eine von dem Medium beaufschlagte Platte durch in derselben gebildete Schnitte biegeelastisch gestaltet ist, wobei auf der Platte Dehnungsmeßstreifen zur Erfassung einer Verbiegung der Platte vorgesehen sind.

In der DE 42 23 067 C2 ist ein mikromechanischer Durchflußbegrenzer beschrieben, der in einer Mehrschichtstruktur aufgebaut ist. Dieser Durchflußbegrenzer ist in Kombination mit einem mikromechanischen Ventil für mikromechanische Dosiervorrichtungen einsetzbar.

Die DE-AS 19 43 021 lehrt eine Einrichtung zur Messung des Durchflusses eines Rohrs nach dem Wirkdruckverfahren, bei der eine vom Meßdruck abhängige elastische Verformung eines Bauteils in ein elektrisches Signal umgewandelt wird. Die zur Erfassung der elastischen Verformung verwendeten Dehnungsmeßfühler sind dabei direkt an einer elatischen Meßblende, die in dem durchströmten Rohr angeordnet ist, angebracht.

Ausgehend von dem genannten Stand der Technik besteht die Aufgabe der vorliegenden Erfindung darin, eine Dosiervorrichtung mit einem einfachen Aufbau zu schaffen, die die exakte Dosierung eines zu dosierenden Mediums ermöglicht.

Diese Aufgabe wird durch eine Dosiervorrichtung gemäß Anspruch 1 gelöst.

Die vorliegende Erfindung schafft eine Dosiervorrichtung mit einem Dosiervorrichtungselement zum Dosieren eines Fluidflusses von einer Eingangsseite zu einer Ausgangsseite des Dosiervorrichtungselements. Das Dosiervorrichtungselement weist eine Membran, die zumindest eine Öffnung aufweist, die für ein zu dosierendes Medium einen Flußwiderstand darstellt, und einen in die Membran integrierten Drucksensor zum Erfassen einer zwischen der Eingangsseite und der Ausgangsseite des Dosiervorrichtungselements vorliegenden Druckdifferenz auf. Die Dosiervorrichtung weist ferner einen Temperatursensor zum Erfassen der Temperatur des zu dosierenden Mediums, einen steuerbaren Druckgeber zum eingangsseitigen Beaufschlagen des zu dosierenden Mediums mit einem Druck, und eine Steuervorrichtung zum Steuern des steuerbaren Druckgebers abhängig von der mittels des Drucksensors erfaßten Druckdifferenz und der mittels des Temperatursensors erfaßten Temperatur auf.

Vorzugsweise besteht das Dosiervorrichtungselement aus einem eine Halbleitermembran aufweisenden Halbleiterchip, wobei der Drucksensor durch auf oder in der Membran angeordnete piezoresistive Widerstände gebildet ist. In dem Halbleiterchip, der beispielsweise aus Silizium bestehen kann, ist ferner vorzugsweise der Temperatursensor integriert.

Eine Alarmgebereinrichtung kann vorgesehen sein, die einen Alarm ausgibt, falls vor und/oder hinter der Membran angeordnete Strömungskanäle ein Leck aufweisen oder verstopft sind oder falls die zumindest eine Öffnung der Membran verstopft ist, wobei derartige Störungen auf der Basis der durch den Drucksensor erfaßten Druckdifferenz erkannt werden können.

Die erfindungsgemäße Dosiervorrichtung ist gegenüber bekannten Dosiervorrichtungen vorteilhaft dahingehend, daß die Druckdifferenz direkt mit einem Sensor bestimmt wird und nicht durch zwei Druckmessungen gegenüber Atmosphäre, wobei die Ergebnisse der beiden Messungen nachfolgend voneinander subtrahiert werden. Ferner ist der Flußwiderstand, die Restriktion, gemäß der vorliegenden Erfindung direkt in den Drucksensor integriert. Folglich wird nur ein einziger Chip benötigt, der sowohl die Funktion der Druckdifferenzmessung als auch die Funktion des Flußwiderstands, der Flußrestriktion, erfüllt.

Weiterbildungen der vorliegenden Erfindung sind in den abhängigen Ansprüchen dargelegt.

Ein bevorzugtes Ausführungsbeispiel der vorliegenden Erfindung wird nachfolgend teilweise bezugnehmend auf die einzige beiliegende Fig. näher erläutert.

Die Fig. zeigt eine schematische Querschnittansicht eines bei der erfindungsgemäßen Dosiervorrichtung verwendeten Dosiervorrichtungselements.

Wie in der Fig. dargestellt ist, dient bei dem bevorzugten Ausführungsbeispiel der vorliegenden Erfindung als Dosierelement ein Dosierchip, der als ein piezoresistiver Drucksensor mit einem oder mehreren Löchern in der Drucksensormembran, die als Flußwiderstand mit definiertem Strömungswiderstand dienen, ausgebildet ist.

In der Fig. ist der Dosierchip, der vorzugsweise durch einen Halbleiterchip, der beispielsweise aus Silizium besteht, gebildet ist, allgemein mit dem Bezugszeichen 10 bezeichnet. In dem Chip ist beispielsweise durch herkömmliche Ätztechniken eine Membran 12 gebildet. Auf der Membran sind bei dem bevorzugten Ausführungsbeispiel vier in einer Wheatstone'schen Brückenschaltung angeordnete piezoresistive Widerstände 14 angeordnet, von denen in der Fig. nur zwei zu sehen sind. Ferner ist in der Membran zumindest eine Öffnung 16, die als Flußwiderstand mit definiertem Strömungswiderstand dient, vorgesehen. Die Öffnung 16 kann beispielsweise mittels herkömmlicher Trockenätztechniken in der Membran 12 gebildet sein.

Bei dem in der Fig. dargestellten Ausführungsbeispiel liegt linksseitig ein Überdruck an der Membran 12 an. Dadurch ergibt sich die dargestellte Verformung der Membran, die mittels der piezoresistiven Widerstände 14 erfaßt werden kann. Diese Verformung ist ein Maß für den an der Membran 12 anliegenden Überdruck.

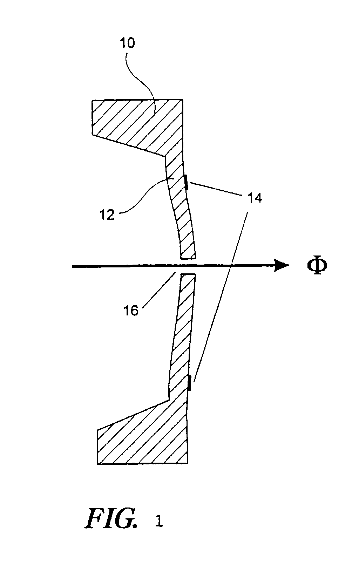

Beim Anlegen eines derartigen Überdrucks strömt das zu dosierende Medium, d.h. eine Flüssigkeit oder ein Gas, durch das Loch 16 oder alternativ die Löcher, wenn eine Mehrzahl von Löchern in der Membran 12 vorgesehen ist. Wie beschrieben, wird die Membran 12 aufgrund des Druckabfalls ausgelenkt, wodurch direkt die Druckdifferenz von der in der Figur linksseitig angeordneten Eingangsseite zu der in der Figur rechtsseitig angeordneten Ausgangsseite, die an dem Flußwiderstand anliegt, detektiert werden kann.

Der Fluß φ, der in der Fig. durch den Pfeil angedeutet ist, der durch den Flußwiderstand fließt, ist eine Funktion des an demselben anliegenden Druckes.

Besteht der Flußwiderstand, die Flußrestriktion, aus einem Loch, dessen Durchmesser sehr viel kleiner ist als dessen Länge, so ist der Zusammenhang zwischen Fluß und Druck linear. Der Durchfluß wird dabei vor allem durch eine laminare Reibung begrenzt. Es ergibt sich ein Strömungsgesetz, das ähnlich dem Gesetz von Hagen-Poiseuille ist. Ist der Durchmesser der Öffnung 16 sehr viel größer als die Länge derselben, sind die Strömungsverhältnisse ähnlich zu einem reibungsfreien Ausfluß aus einer Blende, wobei nach dem Gesetz von Torricelli eine Abhängigkeit des Flusses, die von der Quadratwurzel der Druckdifferenz, die an dem Flußwiderstand anliegt, abhängt, erhalten wird.

In jedem Fall ist der Durchfluß durch die Flußrestriktion eine monoton steigende Funktion des an derselben abfallenden Druckes. Somit ist eine Kalibrierung möglich, wobei durch die Messung des Druckabfalls der Fluß bestimmt werden kann. Somit ist der Chip zum Dosieren von Fluiden, d.h. Gasen und Flüssigkeiten, geeignet.

Jedes Strömungsmedium hat als Stoffgröße seine Viskosität n(T), die von der Temperatur abhängt. Es ist somit vorteilhaft, insbesondere wenn eine quantitative Strömungsmessung durchgeführt werden soll, einen Temperatursensor auf dem Chip zu integrieren. Dadurch kann die Temperatur des Strömungsmediums erfaßt werden. Ferner ist die Kenntnis der Funktion n(T) für ein bestimmtes Strömungsmedium vorteilhaft. Auf der Basis der erfaßten Temperatur und der Funktion n(T) kann dann bei einer Temperaturänderung ein regelbarer Druckgeber einer Dosiervorrichtung nachgestellt werden, um den Fluß konstant auf einer festgelegten Dosierrate zu halten.

Dosiervorrichtungen, die nach dem Überdruckprinzip arbeiten, für die das erfindungsgemäße Dosiervorrichtungselement geeignet ist, umfassen häufig Druckgeber zum Erzeugen eines Überdrucks. Für Dosierzwecke nach dem Überdruckprinzip wird häufig ein Überdruck in der Größenordnung von 50 kPa verwendet. Es ist offensichtlich, daß bei Verwendung eines Überdrucks in dieser Größenordnung der Drucksensor auf diesen Druck ausgelegt sein sollte.

Sollen chemisch aggressive Strömungsmedien dosiert werden, können dem zu dosierenden Medium ausgesetzte Bereiche des Halbleiterchips mit einer Passivierungsschicht versehen sein. Insbesondere Leiterbahnen auf der Vorderseite des Drucksensors werden vorteilhafterweise mit einer derartigen Passivierung versehen.

Im folgenden werden kurz beispielhafte Größenordnungen für das erfindungsgemäße Dosiervorrichtungselement angegeben. Die laterale Abmessung der Drucksensormembran 12 liegt vorzugsweise in einem Bereich von 2 x 2 mm² bis 5 x 5 mm². Die Membrandicke liegt vorzugsweise in einem Bereich zwischen 20 µm und 60 µm. Der Durchmesser der Öffnung 16 kann beispielsweise in einem Bereich von 10 µm bis 100 µm liegen. Wie oben dargelegt wurde, kann in der Membran 12 eine Mehrzahl von Öffnungen 16 angeordnet sein.

Im folgenden wird beschrieben, wie auf der Basis der von dem Drucksensor 14 ausgegebenen Signale eine Alarmgebereinrichtung einen Alarm ausgeben kann, falls Störungen, beispielsweise Lecks oder Verstopfungen, in einer Dosiervorrichtung, die das erfindungsgemäße Dosiervorrichtungselement aufweist, auftreten. Eine derartige Alarmgebung kann beispielsweise auf dem Gebiet der Medikamentendosierung lebensrettend sein.

Eine erste Störung die auftreten kann, ist ein Ausfall des Druckgebers. Bei einem Ausfall des Druckgebers fließt kein oder nur noch ein sehr geringer Fluß durch die Öffnung der Membran. Ein geringer Fluß kann beispielsweise durch einen hydrostatischen Druck, der durch die Höhendifferenz zwischen einem Medienreservoir und einem Ausgang der Dosiervorrichtung bewirkt wird, bedingt sein. An dem Drucksensor fällt somit kein oder nur noch ein sehr geringer Druck ab, wobei in diesem Fall eine Alarmfunktion durch eine Alarmgebereinrichtung, die beispielsweise in eine Steuervorrichtung der Dosiervorrichtung integriert sein kann, ausgelöst wird.

Weitere Störungen können durch Lecks in Strömungskanälen strömungsmäßig vor und hinter dem Flußwiderstand bewirkt werden. Befindet sich vor dem Flußwiderstand, d.h. auf der Hochdruckseite, ein Leck, wird die resultierende Flußänderung ebenfalls durch die Differenzdruckmessung erfaßt, da nunmehr ein geringerer Fluß durch den Dosierchip fließt. Wesentlich unwahrscheinlicher ist dagegen ein Leck strömungsmäßig hinter dem Flußwiderstand, d.h. auf der Niederdruckseite. Ein solches Leck kann von dem Dosierchip nicht erfaßt werden. Als Sicherheitsmaßnahme sollte der Dosierchip daher möglichst nahe am Dosierausgang der Dosiervorrichtung, beispielsweise an der Kanüle, mit möglichst wenigen und hochwertigen Verbindern angebracht sein.

Eine weitere Störung kann durch Verstopfungen des Strömungskanals vor oder nach dem Flußwiderstand bewirkt sein. Im Falle der Medikamentendosierung verschließt sich beispielsweise nach einiger Zeit häufig eine am Patienten gelegte Kanüle, so daß die Dosierfunktion nicht mehr gewährleistet ist. Verschließt sich der Strömungskanal vor oder nach dem Flußwiderstand, etwa in einem Filter oder in der Kanüle, so fließt kein Fluß mehr, weshalb kein Druck mehr an dem Drucksensor abfällt. Somit kann in diesem Fall eine Alarmfunktion ausgelöst werden.

Es ist ferner möglich, daß der Flußwiderstand des Dosierchips selbst, der durch die Öffnung in der Membran gebildet ist, verstopft. Somit fällt der gesamte Druck an dem Dosierchip, d.h. der Membran, ab. In der Regel ist der Druckabfall am Dosierchip jedoch wesentlich größer als der am Rest der Dosiervorrichtung, etwa an Schläuchen, Verbindern, Filtern oder Kanülen der Dosiervorrichtung, abfallende Druck. Daher wird der kleine, gemessene Druckanstieg im Fall einer Verstopfung der Restriktion nicht von einem Druckanstieg in Folge einer Temperaturerhöhung, bei Flüssigkeiten, bzw. einer Temperaturerniedrigung, bei Gasen, des Strömungsmediums zu unterscheiden sein. Bei Flüssigkeiten sinkt die Viskosität mit steigender Temperatur, weshalb der Fluß und somit der Druckanstieg zunimmt, während bei Gasen die Viskosität mit sinkender Temperatur abnimmt. Soll auch in einem solchen Fall des Verstopfens des Flußwiderstands in der Membran das Auslösen einer Alarmfunktion möglich sein, sind zusätzliche Maßnahmen notwendig.

Eine erste Maßnahme besteht darin, zwei Dosierchips der oben beschriebenen Art hintereinander zu schalten. Im Normalbetrieb fällt dann an beiden baugleichen Chips etwa der halbe Dosierdruck ab. Wenn die Öffnung von einem der beiden Dosierchips verstopft, fällt an diesem der gesamte Druck ab, während an dem anderen Chip dann kein Druck abfällt. Somit kann das Verstopfen des Flußwiderstands, d.h. der Öffnung, zuverlässig gemessen werden. Mit einer derartigen Anordnung zweier hintereinander geschalteter Dosierchips kann auch eine teilweise Blockierung eines Flußwiderstands gemessen werden, da sich das Verhältnis der beiden Drücke weg von 1:1 verschiebt. Nachteilig ist jedoch der höhere Aufwand, da man zwei Chips benötigt, und ferner der Aufwand für die Systemsteuerung höher ist.

Eine weitere Möglichkeit, eine Verstopfung in einem Flußwiderstand zu erkennen, bietet die Hintereinanderschaltung eines Dosierchips und eines passiven Flußwiderstands. Wird ein passiver Flußwiderstand strömungsmäßig vor oder hinter dem Dosierchip in Serie angebracht, wobei der Strömungswiderstand beim Nennfluß gleich dem des Dosierchips ist, fällt bei Normalbetrieb der halbe Dosierdruck an dem Dosierchip und der halbe Dosierdruck an dem passiven Flußwiderstand ab. Liegt nun eine Verstopfung des Flußwiderstands des Dosierchips vor, steigt der Druckabfall an demselben auf das Doppelte, was von der Systemsteuerung als Alarmfall erkannt wird, wenn dieser Druckabfall außerhalb des Druckbereichs, der bei der Druckregelung durch die Viskositätsänderung bei einer Temperaturschwankung gegeben ist, liegt. Falls dieser Druckanstieg auf das Doppelte nicht ausreicht, kann auch das Verhältnis der Strömungswiderstände des passiven Flußwiderstands und des Flußwiderstands des Dosierchips vergrößert werden. Als passive Flußwiderstände können beispielsweise Glaskapillare, Mikrokanäle oder in Silizium geätzte Löcher verwendet werden.

Die vorliegende Erfindung schafft somit Dosiervorrichtungselemente sowie Dosiervorrichtungen unter Verwendung derselben, bei denen die Druckdifferenz direkt mit einem Sensor bestimmt wird und nicht durch zwei Druckmessungen gegenüber der Atmosphäre, wobei dann die Ergebnisse der zwei Druckmessungen voneinander subtrahiert werden. Ferner benötigt man gemäß der vorliegenden Erfindung nur noch einen einzigen Chip, der sowohl die Funktion der Druckdifferenzmessung als auch die Funktion der Flußrestriktion erfüllt, da die Restriktion direkt in den Drucksensor integriert ist.

## Patentansprüche

1. Dosiervorrichtung mit einem Dosiervorrichtungselement (10) zum Dosieren eines Fluidflusses (φ) von einer Eingangsseite zu einer Ausgangsseite des Dosiervorrichtungselements (10), dadurch gekennzeichnet, daß das Dosiervorrichtungselement folgende Merkmale aufweist:
eine Membran (12), die zumindest eine Öffnung (16) aufweist, die für ein zu dosierendes Medium einen Flußwiderstand darstellt; und
einen in die Membran (12) integrierten Drucksensor (14) zum Erfassen einer zwischen der Eingangsseite und der Ausgangsseite des Dosiervorrichtungselements (10) vorliegenden Druckdifferenz,
wobei die Dosiervorrichtung ferner folgende Merkmale aufweist:
einen Temperatursensor zum Erfassen der Temperatur des zu dosierenden Mediums,
einen steuerbaren Druckgeber zum eingangsseitigen Beaufschlagen des zu dosierenden Mediums mit einem Druck, und
eine Steuervorrichtung zum Steuern des steuerbaren Druckgebers abhängig von der mittels des Drucksensors (14) erfaßten Druckdifferenz und der mittels des Temperatursensors erfaßten Temperatur.

2. Dosiervorrichtung gemäß Anspruch 1, bei der das Dosiervorrichtungselement als Halbleiterchip ausgebildet ist, wobei die Membran (12) eine Halbleitermembran ist.

3. Dosiervorrichtung gemäß Anspruch 2, bei der der Drucksensor (14) durch auf oder in der Membran angeordnete piezoresistive Widerstände gebildet ist.

4. Dosiervorrichtung gemäß Anspruch 2 oder 3, bei der der Temperatursensor auf dem Halbleiterchip integriert ist.

5. Dosiervorrichtung gemäß einem der Ansprüche 2 bis 4, bei der dem zu dosierenden Medium ausgesetzte Bereiche des Halbleiterchips passiviert sind.

6. Dosiervorrichtung gemäß einem der Ansprüche 1 bis 5, die ferner eine Alarmgebereinrichtung zum Ausgeben eines Alarms aufweist, falls vor und/oder hinter der Membran angeordnete Strömungskanäle ein Leck aufweisen oder verstopft sind oder die zumindest eine Öffnung (16) der Membran (12) verstopft ist.

7. Dosiervorrichtung gemäß einem der Ansprüche 1 bis 6, bei der das Dosiervorrichtungselement (10) nahe einem Dosierausgang der Dosiervorrichtung in der Dosiervorrichtung angebracht ist.

8. Dosiervorrichtung gemäß einem der Ansprüche 1 bis 7, bei der zwei Dosiervorrichtungselemente (10) nach einem der Ansprüche 1 bis 6 hintereinandergeschaltet sind, um auf der Basis des Druckabfalls an den Membranen (12) der beiden Dosiervorrichtungselemente (10) die Erfassung einer Verstopfung oder Blockierung des jeweils in den Membranen (12) vorgesehenen Flußwiderstands zu ermöglichen.

## Claims

1. A proportioner comprising a proportioning element (10) for proportioning a fluid flow (φ) from an input side to an output side of said proportioning element (10), characterized in that said proportioning element comprises the following features:
a membrane (12) comprising at least one opening (16) acting as a flow resistor for a medium to be proportioned; and
a pressure sensor (14) integrated in the membrane (12) for detecting a pressure difference between the input side and the output side of the proportioning element (10),
said proportioner further comprising the following features:
a temperature sensor for detecting the temperature of the medium to be proportioned,
a controllable pressure transducer for input-side application of a pressure to the medium to be proportioned, and
a control device for controlling the controllable pressure transducer in dependence upon the pressure difference detected by means of the pressure sensor (14) and the temperature detected by means of the temperature sensor.

2. A proportioner according to claim 1, wherein the proportioning element is implemented as a semiconductor chip, the membrane (12) being a semiconductor membrane.

3. A proportioner according to claim 2, wherein the pressure sensor (14) is defined by piezoresistive resistors arranged on or in the membrane.

4. A proportioner according to claim 2 or 3, wherein the temperature sensor is integrated on the semiconductor chip.

5. A proportioner according to one of the claims 2 to 4, wherein areas of the semiconductor chip which are exposed to the medium to be proportioned are passivated.

6. A proportioner according to one of the claims 1 to 5, comprising in addition an alarm signalling device for outputting an alarm if flow passages arranged before and/or after the membrane have a leak or are clogged or if the at least one opening (16) of the membrane (12) is clogged.

7. A proportioner according to one of the claims 1 to 6, wherein the proportioning element (10) is arranged in the proportioner close to a proportioning outlet of said proportioner.

8. A proportioner according to one of the claims 1 to 7, wherein two proportioning elements (10) according to one of the claims 1 to 6 are arranged in succession so as to permit, on the basis of the pressure drop across the membranes (12) of the two proportioning elements (10), the detection of clogging or blocking of the respective flow resistor provided in said membranes (12).

## Revendications

1. Dispositif de dosage, avec un élément de dispositif de dosage (10) pour le dosage d'un écoulement de fluide (ϕ) d'un côté d'entrée vers un côté de sortie de l'élément de dispositif de dosage (10), caractérisé par le fait que l'élément de dispositif de dosage présente les caractéristiques suivantes :
une membrane (12) présentant au moins une ouverture (16) représentant une résistance à l'écoulement d'un fluide à doser ; et
un détecteur de pression (14), intégré dans la membrane (12), destiné à détecter une différence de pression entre le côté d'entrée et le côté de sortie de l'élément de dispositif de dosage (10),
le dispositif de dosage présentant, par ailleurs, les caractéristiques suivantes :
un détecteur de température destiné à détecter la température du fluide à doser,
un capteur de pression réglable destiné à soumettre, du côté de l'entrée, le fluide à doser à une pression, et
un dispositif de réglage destiné à régler le capteur de pression réglable en fonction de la différence de pression détectée à l'aide du détecteur de pression (14) et de la température détectée à l'aide du détecteur de température.

2. Dispositif de dosage suivant la revendication 1, dans lequel l'élément de dispositif de dosage se présente sous forme de puce semi-conductrice, la membrane (12) étant une membrane semi-conductrice.

3. Dispositif de dosage suivant la revendication 2, dans lequel le détecteur de pression (14) est formé par des résistances piézoélectriques disposées sur ou dans la membrane.

4. Dispositif de dosage suivant la revendication 2 ou 3, dans lequel le détecteur de température est intégré sur la puce semi-conductrice.

5. Dispositif de dosage suivant l'une des revendications 2 à 4, dans lequel les zones de la puce semi-conductrice exposées au fluide à doser sont passivées.

6. Dispositif de dosage suivant l'une des revendications 1 à 5, présentant, par ailleurs, un dispositif de sortie d'alarme destiné à sortir une alarme au cas où des canaux d'écoulement disposés devant et/ou derrière la membrane présentent une fuite ou sont obturés ou que l'au moins une ouverture (16) de la membrane (12) est obturée.

7. Dispositif de dosage suivant l'une des revendications 1 à 6, dans lequel l'élément de dispositif de dosage (10) est placé près d'une sortie de dosage du dispositif de dosage, dans le dispositif de dosage.

8. Dispositif de dosage suivant l'une des revendications 1 à 7, dans lequel deux éléments de dispositif de dosage (10) suivant l'une des revendications 1 à 6 sont connectés l'un derrière l'autre, afin de permettre, sur base de la chute de pression aux membranes (12) des deux éléments de dispositif de dosage (10), de détecter une obturation ou un blocage de la résistance à l'écoulement prévue dans chacune des membranes.
